# EUROPÄISCHE PATENTSCHRIFT

(11) **EP 1 148 794 B1**
(45) Veröffentlichungstag und Bekanntmachung des Hinweises auf die Patenterteilung: **06.04.2005**
(21) Anmeldenummer: 00900009.2
(22) Anmeldetag: 04.01.2000
(51) Int. Cl.: A23L 1/48, A23L 1/06

(54) **BROTAUFSTRICH MIT COLA-AROMA UND VERFAHREN ZUM HERSTELLEN EINES SOLCHEN BROTAUFSTRICHS**
BREAD SPREAD WITH COLA FLAVOR AND METHOD FOR PRODUCING SAID BREAD SPREAD
PRODUIT A L'AROME DE COLA A TARTINER SUR DU PAIN, ET PROCEDE DE PRODUCTION D'UN TEL PRODUIT A TARTINER

(30) Priorität: 01.02.1999 CH 17599
(43) Veröffentlichungstag der Anmeldung: 31.10.2001
(73) Patentinhaber: Gschwind, René, 5014 Gretzenbach (CH)
(72) Erfinder: Gschwind, René, 5014 Gretzenbach (CH)
(74) Vertreter: Volpert, Marcus
(86) Internationale Anmeldenummer: PCT/CH2000/000001
(87) Internationale Veröffentlichungsnummer: WO 2000/045652

(56) Entgegenhaltungen:
- EP-A- 0 496 426
- DE-A- 19 736 429
- US-A- 4 197 325
- DATABASE WPI Section Ch, Week 198532 Derwent Publications Ltd., London, GB; Class D13, AN 1985-193602 XP002138428 & JP 60 120950 A (SALAD MELON KK), 28. Juni 1985 (1985-06-28)
- DATABASE WPI Section Ch, Week 198417 Derwent Publications Ltd., London, GB; Class D13, AN 1984-103724 XP002138429 & JP 59 045837 A (HOUSE SHOKUHIN KOGYO KK) , 14. März 1984 (1984-03-14)
- DATABASE FSTA [Online] INTERNATIONAL FOOD INFORMATION SERVICE (IFIS), FRANFURT/MAIN, DE AN = 85-3-04-10058, 1985 BEZZUBOV A.D. ET AL.: "Production of marmelade having therapeutic properties" XP002138427 & SU 1 109 116 A

## Beschreibung

Die Erfindung bezieht sich auf einen Brotaufstrich, wie er beispielsweise aus der Praxis bekannt ist, sowie auf ein Verfahren zum Herstellen eines solchen Brotaufstrichs.

Derartige Aufstriche dienen vornehmlich zum Belegen von Brot oder Kleingebäck vor allem zum Frühstück. Bekannt sind beispielsweise Marmeladen oder Konfitüren, welche einen hohen Fruchtanteil aufweisen. In den letzten Jahren hat die Verwendung von Nussnugatcremes als Brotaufstrich eine weite Verbreitung gefunden.

Aus der DE-A1-198 42 634 ist eine Brotaufstrichmasse bekannt, weiche aus einer streichfähigen Fruchtgummimasse besteht. Die Fruchtgummimasse enthält vor allem Invertzuckersirup, Wasser, Zitronensäure-Monohydrat, Gelatine, Glycerin und Gummibären-Aroma. Sie kann ferner Fruchtsaft und färbende Fruchtextrakte oder färbende Pflanzenextrakte, pflanzliches Fett sowie Trennmittel enthalten.

Aus der US-A-3 860 725 ist ein Verfahren zum Behandeln von Kokosnussprodukten bekannt. Diese Produkte enthalten beispielsweise organische Säuren, wie z. B. Zitronensäure, und Verdickungsmittel, wie z. B. Stärke, Gelatine, Pektin. Sie können ferner Milch, Sorbit, insbesondere Sorbitol, als Süssungsmittel enthalten und einer Karamelisierung unterzogen werden.

Aus der JP-A-60 120 950 ist ein pastenförmiges Nahrungsmittel bekannt, das beispielsweise Fruchtstücke, Wurzelgemüse, Meerespflanzen, Getreide, Milch, Coca-Cola-Getränke oder Schokoladen als Gemisch mit Weizenmalzgelee aufweist. Aus der EP-A1-0 496 426 ist ein Gelee bekannt, welcher aus einer wässrigen Lösung aus Wasser, Fruchtsaft, Fruchtwein, Milch, gegorener Milch, Kaffee, Cola, Tee usw. und deren Mischungen hergestellt wird. Die in dem letztgenannten Dokument angegebenen Beispiele zeigen die ausschliessliche Verwendung von Fruchtsaft.

Aus der US-A-4 197 325 ist ein Kohlendioxid enthaltender Gelee bekannt, wobei die Flüssigkeit zum Herstellen des Gelees Wasser, Fruchtsaft, Fruchtwein, Fruchtnektar, ein Milchgetränk, Kaffee, Cola und dgl. und deren Mischungen enthalten kann. Die angegebenen Beispiele zeigen entweder die Verwendung eines Fruchtsafts oder eines Cola-Sirups.

Die JP-A-590 45 837 sowie die FSTA Zusammenfassung AN 85-3-04-100 58 offenbaren einen Gelee bzw. einen Zucker-Agarsirup, welcher Koffein enthält.

Der Erfindung liegt die Aufgabe zugrunde, einen Brotaufstrich zu schaffen, welcher einen anderen Geschmack aufweist. Ein anderer Zweck besteht darin, einen den Kreislauf anregenden Brotaufstrich zu schaffen. Ferner liegt der Erfindung die Aufgabe zugrunde, ein Verfahren zum Herstellen eines solchen Brotaufstrichs anzugeben.

Diese Aufgabe wird zum einen durch einen Brotaufstrich mit den Merkmalen des Patentanspruchs 1, zum anderen durch ein Verfahren mit den Merkmalen der Patentansprüche 12 oder 13 gelöst. Vorteilhafte Weiterbildungen sowohl des erfindungsgemässen Brotaufstrichs als auch des erfindungsgemässen Verfahrens sind Gegenstand der jeweiligen Unteransprüche.

Erfindungsgemäss enthält der Brotaufstrich zumindest ein Getränk, Zucker oder Süssungsmittel, Verdickungsmittel, Säuerungsmittel, Cola-Aroma sowie eine Fruchtmasse. Ein solcher Brotaufstrich ermöglicht daher eine Cola-Präsenz auf dem Frühstückstisch. Insbesondere Kindern sind Cola-Produkte aus der Getränke- und Süssmittelindustrie bekannt, so dass ein gewisser Wiedererkennungswert der Geschmacksrichtung ermöglicht und damit ein neuartiger Brotaufstrich geschaffen ist. Demjenigen Kunden, welchem Cola-Produkte schmecken, demjenigen wird auch ein ein Cola-Aroma enthaltender Brotaufstrich schmecken.

Gemäss einer Weiterbildung der Erfindung ist das Getränk ein alkoholisches Getränk oder ein alkoholfreies Getränk, vorzugsweise Wasser, Milch, Fruchtsaft, Gemüsesaft. Derartige Getränke sind weit verbreitet und damit leicht zu beschaffen. Es ist ohne weiteres möglich, die Geschmacksrichtung des erfindungsgemässen Brotaufstrichs auch durch die Auswahl des Getränkes zu beeinflussen bzw. gezielt zu steuern.

Wie zuvor erwähnt, enthält der Brotaufstrich Zucker oder Süssungsmittel, so dass zum einen das Herstellen eines Zucker enthaltenden Brotaufstrichs und zum andern das Herstellen eines weitgehend zuckerfreien Brotaufstrichs, welcher auch für Diabetiker geeignet sein kann, möglich ist. Vorteilhafterweise ist der Zucker der Stoff Trehalose, welcher ein süss schmekkendes Disaccharid mit zahnschonenden, nicht abführenden Eigenschaften aus (Schimmel-)Pilzen sowie Hefen, Flechten, Algen, Bakterien, Moosen, das Süssungsmittel ein Zuckeraustauschstoff, wie z. B. Mannit, Xylit, Sorbit, Isomalt, Maltit, Lactit, Stärkesirup, oder ein Süssstoff, wie z. B. Cyclamat, Aspartam, Saccharin, Acesulfam-Kalium. Damit ist es möglich, auch einen zuckerfreien Brotaufstrich mit Cola-Aroma zu schaffen.

Gemäss einer anderen Ausführungsform ist das Verdickungsmittel vorzugsweise Agar-Agar, Gummi arabicum, Pektin, Guar-Mehl, Johannisbrotbaumkernmehl, Stärke, Dextrin, Gelatine, wobei das Verdickungsmittel vorzugsweise Johannisbrotbaumkernmehl und Pektin oder in einer anderen Variante Pektin und Maisstärke enthält. Derartige Verdickungsmittel sind auf dem Markt bekannt und damit leicht zu beschaffen.

Analoge Ausführungen gelten auch für das Säuerungsmittel, welches gemäss einer bevorzugten Ausführungsform der Erfindung Zitronensäure, Weinsäure und/oder Milchsäure enthält.

Gemäss einer anderen Weiterbildung weist der erfindungsgemässe Brotaufstrich ferner eine Fruchtmasse auf, welche vorzugsweise Apfelmus und/oder eine Nugatmasse, wie Nussnugat-, Mandelnugat-, Mandel-Nuss-Nugatmasse, gesüsstes Nussmark, insbesondere eine Nussnugatcreme, enthält. Derartige Massen dienen vor allem dazu, den Geschmack des Brotaufstrichs zu verändern bzw. zu beeinflussen. Bei Verwendung einer Nussnugatcreme werden sich die den erfindungsgemässen Brotaufstrich verzehrenden Personen an die ihnen als Brotaufstrich bekannte Nussnugatcreme erinnert fühlen und somit positive Erfahren mit einer derartigen Creme auch auf den erfindungsgemässen Brotaufstrich übertragen. Es ist ohne weiteres ersichtlich, dass die Bestandteile Apfelmus und Nussnugatcreme in zahlreichen Lebensmittelgeschäften erhältlich sind.

Gemäss einer anderen Weiterbildung der Erfindung enthält der erfindungsgemässe Brotaufstrich einen Lebensmittelfarbstoff vorzugsweise in Form von Karamelsirup. Dieser dient der farblichen Einstellung und Anpassung des Brotaufstrichs, so dass dieser auch optisch ansprechend gestaltet sein kann.

Gemäss einer anderen Weiterbildung der Erfindung kann der erfindungsgemässe Brotaufstrich weitere Aromastoffe, vorzugsweise Karamel-Aroma und/oder Limetten-Aroma, und/oder stimulierende Stoffe, vorzugsweise Coffein, Taurin, enthalten. Die erstgenannten Stoffe können auch als Geschmacksverstärker dienen. Der Stoff Taurin spielt eine wichtige Rolle bei der Entwicklung des zentralen Nervensystems und beeinflusst Transportvorgänge von Metallionen.

Gemäss einer bevorzugten Weiterbildung der Erfindung enthält der Brotaufstrich folgende Bestandteile in Gewichtsanteilen:

| | |
|---|---|
| 100 | Teile Wasser |
| | |
| 20 | Teile Zucker |
| 1,6 | Teile Johannisbrotbaumkernmehl |
| 1,6 | Teile Pektin |
| | |
| 40 | Teile Stärkesirup |
| 20 | Teile Zucker |
| 40 | Teile Apfelmus |
| 20 | Teile Karmelsirup |
| | |
| 1,5 | Teile Zitronensäure |
| 0,9 | Teile Cola-Aroma |
| 0,6 | Teile Karamel-Aroma |
| 0,1 | Teile Limetten-Aroma. |

Ein derartiger Brotaufstrich schmeckt gut und kann ohne weiteres anderen Frühstücksprodukten, wie z. B. Quark, zugemischt werden. Die gesundheitsfördernde Wirkung wird dadurch erhöht.

Gemäss einer anderen Weiterbildung weist ein weitgehend zukkerfreier Brotaufstrich folgende Bestandteile in Gewichtsanteilen auf:

| | |
|---|---|
| 100 | Teile Milch |
| 50 | Teile Isomalt |
| | |
| 7 | Teile Maisstärke |
| 1,6 | Teile Pektin |
| 0,2 | Teile Aspartam |
| | |
| 60 | Teile Sorbit |
| | |
| 20 | Teile Nussnugatcreme |
| 0,2 | Teile Cola-Aroma |
| 1 | Teil Karamel-Aroma. |

Dieser Brotaufstrich hat den Vorteil, dass er nur wenig Zucker enthält und damit auch für Diabetiker geeignet sein kann. Auch dieser Brotaufstrich ist mit anderen, üblicherweise zum Frühstück verzehrten Produkten mischbar.

Es ist gemäss der Erfindung natürlich auch möglich, einen völlig zuckerfreien Brotaufstrich mit Cola-Aroma herzustellen.

Verfahrensseitig wird die gestellte Aufgabe durch ein Verfahren mit den Merkmalen der Patentansprüche 12 oder 13 gelöst.

Die darin angegebenen Verfahrensschritte Mischen, Einrühren, Aufkochen, Zugeben, Auflösen unter Rühren, Zugeben unter Rühren sind bei Verwendung einer Heizplatte leicht durchzuführen. Derartige Heizplatten sind in nahezu jedem Haushalt vorhanden. Das Herstellen des erfindungsgemässen Brotaufstrichs kann auch durch ungelerntes Personal erfolgen.

Gemäss einer vorteilhaften Weiterbildung erfolgt das Auflösen vorzugsweise bei einer Temperatur von etwa 60 °C, das Aufkochen vorzugsweise für einen Zeitraum von etwa 5 Sekunden und das Abfüllen vorzugsweise bei einer Temperatur von etwa 85 °C. Damit ist es möglich, den erfindungsgemässen Brotaufstrich leicht und schnell herzustellen.

Ausführungsbeispiele des Erfindungsgegenstandes werden nachfolgend näher erläutert.

Der erfindungsgemässe Brotaufstrich enthält zumindest ein Getränk, Zucker oder Süssungsmittel, Verdickungsmittel, Säuerungsmittel und Cola-Aroma.

Das Getränk ist vorzugsweise Wasser oder Milch, kann aber auch ein Fruchtsaft oder Gemüsesaft oder auch ein alkoholisches Getränk sein.

Der Zucker ist vorzugsweise ein Feinkristallzucker. Es ist aber auch möglich, jedwede andere Zuckerarten, so z.B. den Stoff Trehalose, zu verwenden. Anstelle von Zucker kann auch ein Süssungsmittel zum Einsatz kommen. Dies ist ein Zukkeraustauschstoff, wie z. B. Mannit, Xylit, Sorbit, insbesondere Sorbitol, Isomalt, Maltit, Lactit, Stärkesirup, oder ein Süssstoff, wie z. B. Cyclamat, Aspartam, Saccharin, Acesulfam-Kalium. Der Stärkesirup wird in der Praxis auch Glucosesirup genannt und ist beispielsweise unter der Artikelnummer 0445 bei der Firma Pistor, Rothenburg, Schweiz erhältlich. Anstelle des Stärkesirups ist es auch möglich, Melasse oder Fruchtdicksäfte zu verwenden.

Das Verdickungsmittel ist z. B. Agar-Agar, Gummi arabicum, Pektin, Guar-Mehl, Johannisbrotbaumkernmehl, Stärke, Dextrin, Gelatine. Das vorerwähnte Pektin kann beispielsweise bei der Firma Obipektin, Bischofszell, Schweiz unter dem Typ Violettband bezogen werden.

Das Johannisbrotbaumkernmehl kann unter der Bezeichnung Videogumm 175 von der Firma Unipektin, Eschenz, Schweiz bezogen werden.

Gemäss einer einer bevorzugten Ausführungsform der Erfindung enthält das Verdickungsmittel Johannisbrotbaumkernmehl und Pektin oder, gemäss einer anderen Ausführungsform, Pektin und Maisstärke.

Das Säuerungsmittel enthält Zitronensäure. Es ist auch möglich, Weinsäure und/oder Milchsäure als Säuerungsmittel zu verwenden.

Gemäss einer bevorzugten Ausführungsform enthält der erfindungsgemässe Brotaufstrich eine Fruchtmasse, vorzugsweise Apfelmus und/oder eine Nugatmasse, wie Nussnugat-, Mandelnugat-, Mandel-Nuss-Nugatmasse, gesüsstes Nussmark, insbesondere eine Nussnugatcreme. Mit Hilfe der Fruchtmasse ist der Fruchtgeschmack des erfindungsgemässen Brotaufstrichs gezielt einstellbar. Das Apfelmus ist beispielsweise bei der Konservenfabrik Bischofszell, Bischofszell, Schweiz erhältlich. Die vorerwähnte Nussnugatcreme entspricht denjenigen Cremes dieses Typs, welche üblicherweise in Lebensmittelgeschäften erhältlich sind. Die Erfindung ist nicht auf Apfelmus als Fruchtmasse beschränkt. Letztlich können sämtliche musförmige oder pastenförmige oder stückige Fruchtmassen verwendet werden.

Gemäss einer Ausführungsform der Erfindung enthält der Brotaufstrich einen Lebensmittelfarbstoff in Form von Karamelsirup. Es können auch andere für das Färben von Lebensmitteln zugelassene Stoffe eingesetzt werden. Der Karamelsirup ist beispielsweise unter dem Typ 75/700 bei der Firma Flachsmann, Wädenswil, Schweiz erhältlich. Gemäss einer anderen Ausführungsform der Erfindung enthält der Brotaufstrich weitere Aromastoffe, wie z. B. Karamel-Aroma und Limetten-Aroma, wobei ersteres unter dem Typ 030.022 und letzteres unter dem Typ 020.045 bei der vorgenannten Firma Flachsmann erhältlich ist, und/oder stimulierende Stoffe, wie z.B. Coffein, Taurin.

Gemäss einer ersten bevorzugten Weiterbildung der Erfindung enthält der Brotaufstrich etwa folgende Bestandteile in Gewichtsanteilen:

| | |
|---|---|
| 100 | Teile Wasser |
| | |
| 20 | Teile Zucker |
| 1,6 | Teile Johannisbrotbaumkernmehl |
| 1,6 | Teile Pektin |
| | |
| 40 | Teile Stärkesirup |
| 20 | Teile Zucker |
| 40 | Teile Apfelmus |
| 20 | Teile Karmelsirup |
| | |
| 1,5 | Teile Zitronensäure |
| 0,9 | Teile Cola-Aroma |
| 0,6 | Teile Karamel-Aroma |
| 0,1 | Teile Limetten-Aroma. |

Gemäss einer zweiten, bevorzugten Ausführungsform der Erfindung enthält ein weitgehend zuckerfreier Brotaufstrich etwa folgende Bestandteile in Gewichtsanteilen:

| | |
|---|---|
| 100 | Teile Milch |
| 50 | Teile Isomalt |
| | |
| 7 | Teile Maisstärke |
| 1,6 | Teile Pektin |
| 0,2 | Teile Aspartam |
| | |
| 60 | Teile Sorbit |
| | |
| 20 | Teile Nussnugatcreme |
| 0,2 | Teile Cola-Aroma |
| 1 | Teil Karamel-Aroma. |

Es ist klar, dass der Brotaufstrich neben den vorgenannten Substanzen weitere Stoffe, wie z. B. Aromen jeglicher Art und Geschmacksrichtung, Emulgatoren, wie z. B. Lecitin, Mono- und Diglyceride, Fette und Öle, wie z. B. Kokosfett, Palmkernöl, tierische und pflanzliche Fette, und, wie zuvor angegeben, Zusätze von Coffein und anderen stimulierenden Substanzen, welche in Lebensmitteln und Aufbaupräparaten zugelassen sind, enthalten kann.

Ferner ist es möglich, den erfindungsgemässen Brotaufstrich mit Milcherzeugnissen, wie z. B. Quark, Frischkäse, oder mit Fruchtpasten, insbesondere Nusspasten, zu mischen. Der Brotaufstrich kann ferner sogenannte technische Hilfsstoffe, wie z. B. Säurepuffer, Aufschäummittel, Kohlendioxid bildende Stoffe, Antioxidationsmittel, Konservierungsstoffe, Schaumverhüter, enthalten.

Nachfolgend wird das Verfahren zum Herstellen des Brotaufstrichs gemäss der vorerwähnten ersten und zweiten bevorzugten Ausführungsform näher erläutert.

Das Verfahren umfasst die folgenden Schritte:
a) Bereitstellen eines ersten Brotaufstrichbestandteils aus 100 Gew.-Teilen Wasser;
b) Mischen eines zweiten Brotaufstrichbestandteils aus 20 Gew.-Teilen Zucker, 1,6 Gew.-Teilen Johannisbrotbaumkernmehl, 1,6 Gew.-Teilen Pektin;
c) Einrühren des zweiten Brotaufstrichbestandteils gemäss Schritt b) in den ersten Brotaufstrichbestandteil gemäss Schritt a) und Aufkochen des entstehenden Gemisches;
d) Zugeben eines dritten Brotaufstrichbestandteils aus 40 Gew.-Teilen Stärkesirup, 20 Gew.-Teilen Zucker, 40 Gew.-Teilen Apfelmus, 20 Gew.-Teilen Karamelsirup zu dem Gemisch gemäss Schritt c), Auflösen des dritten Brotaufstrichbestandteils unter Rühren und Aufkochen des entstehenden Gemisches;
e) Mischen eines vierten Brotaufstrichbestandteils aus 1,5 Gew.-Teilen Zitronensäure, 0,9 Gew.-Teilen Cola-Aroma, 0,6 Gew.-Teilen Karamel-Aroma, 0,1 Gew.-Teilen Limetten-Aroma;
f) Zugeben und Verrühren des vierten Brotaufstrichbestandteils zu dem bzw. mit dem gekochten Gemisch gemäss Schritt d) und Abfüllen des fertigen Aufstrichs bei einer Temperatur von etwa 85 °C.

Vorzugsweise wird das Kochgefäss mit dem darin enthaltenen Gemisch gemäss Schritt c) nach dem Aufkochen zunächst von der Heizplatte bzw. vom Herd genommen. Das Zugeben gemäss Schritt d) und das Rühren gemäss Schritt d) erfolgt mit geringer Drehzahl einer Mischeinrichtung pro Zeiteinheit, das Verrühren gemäss Schritt f) erfolgt durch schnelles Drehen einer Mischeinrichtung pro Zeiteinheit.

Das Verfahren zum Herstellen eines Brotaufstrichs gemäss dem zweiten bevorzugten Ausführungsbeispiel erfolgt durch die nachfolgend genannten Schritte:
a) Bereitstellen eines ersten Brotaufstrichbestandteils aus 100 Gew.-Teilen Milch;
b) Einrühren und Auflösen von 50 Gew.-Teilen Isomalt in den/dem ersten Brotaufstrichbestandteil gemäss Schritt a);
c) Mischen eines zweiten Brotaufstrichbestandteils aus 7 Gew.-Teilen Maisstärke, 1,6 Gew.-Teilen Pektin, 0,2 Gew.-Teilen Aspartam;
d) Einrühren des zweiten Brotaufstrichbestandteils gemäss Schritt c) in das Gemisch gemäss Schritt b);
e) Zugeben eines dritten Brotaufstrichbestandteils aus 60 Gew.-Teilen Sorbit zu dem Gemisch gemäss Schritt d), Aufkochen des entstehenden Gemisches unter Rühren;
f) Zugeben und Verrühren eines vierten Brotaufstrichbestandteils aus 20 Gew.-Teilen Nussnugatcreme, 0,2 Gew.-Teilen Cola-Aroma, 1 Gew.-Teil Karamel-Aroma zu dem bzw. mit dem Gemisch gemäss Schritt e) und Abfüllen des fertigen Aufstrichs.

Das Mischen gemäss Schritt c) erfolgt trocken und das Einrühren gemäss Schritt d) mit geringer Drehzahl einer Mischeinrichtung pro Zeiteinheit. Während des Aufkochens wird das aufkochende Gemisch ständig gerührt. Dies gilt auch für das Aufkochen des Gemisches gemäss dem ersten bevorzugten Ausführungsbeispiel.

Nach beendetem Aufkochen gemäss Schritt e) wird das Kochgefäss vorzugsweise von der Heizplatte bzw. vom Herd genommen. Gemäss einer Weiterbildung des letztgenannten Verfahrens erfolgt das Einrühren und Auflösen gemäss Schritt b) bei einer Temperatur von etwa 60 °C, das Aufkochen gemäss Schritt e) für einen Zeitraum von etwa 5 s und das Abfüllen gemäss Schritt f) bei einer Temperatur von etwa 85 °C.

Die vorerwähnte Milch ist vorzugsweise ultrahocherhitzt. Isomalt ist beispielsweise bei der Firma Palatinit/Südzucker, Mannheim, Deutschland, Aspartam unter der Bezeichnung Sunett bei der Firma Plüss-Stauffer AG, Oftringen, Schweiz, Maisstärke unter der Bezeichnung Maizena bei der Handelskette Coop, Schweiz, Sorbit unter der Bezeichnung Sorbitol/Neosorb 70/70 bei der Firma Sugro AG, Basel, Schweiz und die Nussnugatcreme beispielsweise unter der Bezeichnung Nutella von der Firma Ferrero bei der Handelskette Coop, Schweiz erhältlich. Es wird darauf hingewiesen, dass einige der in dieser Beschreibung genannten Bezeichnungen eingetragene Marken darstellen.

Das im letztgenannten Verfahren angegebene Cola-Aroma und das dort genannte Karamel-Aroma sind ähnlich, wie in bezug auf das erste bevorzugte Ausführungsbeispiel angegeben, zu beziehen.

Durch der erfindungsgemässen Brotaufstrich wird das bestehende Angebot an Lebensmitteln erweitert, da ein Brotaufstrich mit Cola-Aroma geschaffen wird.

## Patentansprüche

1. Brotaufstrich, enthaltend ein Getränk, Zucker oder Süssungsmittel, Verdickungsmittel, Säuerungsmittel und Cola-Aroma, **gekennzeichnet durch** eine Fruchtmasse.

2. Brotaufstrich nach Anspruch 1, **dadurch gekennzeichnet, dass** das Getränk ein alkoholisches Getränk oder ein alkoholfreies Getränk, vorzugsweise Wasser, Milch, Fruchtsaft, Gemüsesaft, ist.

3. Brotaufstrich nach Anspruch 1 oder 2, **dadurch gekennzeichnet, dass** der Zucker Trehalose, dass das Süssungsmittel ein Zuckeraustauschstoff, vorzugsweise Mannit, Xylit, Sorbit, Isomalt, Maltit, Lactit, Stärkesirup, oder dass das Süssungsmittel ein Süssstoff, vorzugsweise Cyclamat, Aspartam, Saccharin, Acesulfam-Kalium, ist.

4. Brotaufstrich nach einem der vorhergehenden Ansprüche, **dadurch gekennzeichnet, dass** das Verdickungsmittel vorzugsweise Agar-Agar, Gummi arabicum, Pektin, Guar-Mehl, Johannisbrotbaumkernmehl, Stärke, Dextrin, Gelatine ist.

5. Brotaufstrich nach einem der vorhergehenden Ansprüche, **dadurch gekennzeichnet, dass** das Verdickungsmittel Johannisbrotbaumkernmehl und Pektin oder dass das Verdickungsmittel Pektin und Maisstärke enthält.

6. Brotaufstrich nach einem der vorhergehenden Ansprüche, **dadurch gekennzeichnet, dass** das Säuerungsmittel Zitronensäure, Weinsäure und/oder Milchsäure enthält.

7. Brotaufstrich nach einem der vorhergehenden Ansprüche, **dadurch gekennzeichnet, dass** die Fruchtmasse Apfelmus und/oder eine Nugatmasse, wie Nussnugat-, Mandelnugat-, Mandel-Nuss-Nugatmasse, gesüsstes Nussmark, insbesondere eine Nussnugatcreme, enthält.

8. Brotaufstrich nach einem der vorhergehenden Ansprüche, ferner **gekennzeichnet durch** einen Lebensmittelfarbstoff vorzugsweise in Form von Karamelsirup.

9. Brotaufstrich nach einem der vorhergehenden Ansprüche, **gekennzeichnet durch** weitere Aromastoffe, vorzugsweise Karamel-Aroma und/oder Limetten-Aroma, und/oder **durch** stimulierende Stoffe, vorzugsweise Coffein, Taurin.

10. Brotaufstrich nach den Ansprüchen 1 bis 9, **gekennzeichnet durch** folgende Bestandteile in Gewichtsanteilen:
| | |
|---|---|
| 100 | Teile Wasser |
| | |
| 20 | Teile Zucker |
| 1,6 | Teile Johannisbrotbaumkernmehl |
| 1,6 | Teile Pektin |
| | |
| 40 | Teile Stärkesirup |
| 20 | Teile Zucker |
| 40 | Teile Apfelmus |
| 20 | Teile Karamelsirup |
| | |
| 1,5 | Teile Zitronensäure |
| 0,9 | Teile Cola-Aroma |
| 0,6 | Teile Karamel-Aroma |
| 0,1 | Teile Limetten-Aroma. |

11. Brotaufstrich nach den Ansprüchen 1 bis 7 und 9, **gekennzeichnet durch** folgende Bestandteile in Gewichtsanteilen:
| | |
|---|---|
| 100 | Teile Milch |
| 50 | Teile lsomalt |
| | |
| 7 | Teile Maisstärke |
| 1,6 | Teile Pektin |
| 0,2 | Teile Aspartam |
| | |
| 60 | Teile Sorbit |
| 20 | Teile Nussnugatcreme |
| 0,2 | Teile Cola-Aroma |
| 1 | Teil Karamel-Aroma. |

12. Verfahren zum Herstellen eines Brotaufstrichs nach Anspruch 10, **gekennzeichnet durch** die folgenden Schritte:
a) Bereitstellen eines ersten Brotaufstrichbestandteils aus 100 Gew.-Teilen Wasser;
b) Mischen eines zweiten Brotaufstrichbestandteils aus 20 Gew.-Teilen Zucker, 1,6 Gew.-Teilen Johannisbrotbaumkernmehl, 1,6 Gew.-Teilen Pektin;
c) Einrühren des zweiten Brotaufstrichbestandteils gemäss Schritt b) in den ersten Brotaufstrichbestandteil gemäss Schritt a) und Aufkochen des entstehenden Gemisches;
d) Zugeben eines dritten Brotaufstrichbestandteils aus 40 Gew.-Teilen Stärkesirup, 20 Gew.-Teilen Zucker, 40 Gew.-Teilen Apfelmus, 20 Gew.-Teilen Karamelsirup zu dem Gemisch gemäss Schritt c), Auflösen des dritten Brotaufstrichbestandteils unter Rühren und Aufkochen des entstehenden Gemisches;
e) Mischen eines vierten Brotaufstrichbestandteils aus 1,5 Gew.-Teilen Zitronensäure, 0,9 Gew.-Teilen Cola-Aroma, 0,6 Gew.-Teilen Karamel-Aroma, 0,1 Gew.-Teilen Limetten-Aroma;
f) Zugeben und Verrühren des vierten Brotaufstrichbestandteils zu dem bzw. mit dem gekochten Gemisch gemäss Schritt d) und Abfüllen des fertigen Aufstrichs bei einer Temperatur von etwa 85 °C.

13. Verfahren zum Herstellen eines Brotaufstrichs nach Anspruch 11, **gekennzeichnet durch** die folgenden Schritte:
a) Bereitstellen eines ersten Brotaufstrichbestandteils aus 100 Gew.-Teilen Milch;
b) Einrühren und Auflösen von 50 Gew.-Teilen Isomalt in den/dem ersten Brotaufstrichbestandteil gemäss Schritt a);
c) Mischen eines zweiten Brotaufstrichbestandteils aus 7 Gew.-Teilen Maisstärke, 1,6 Gew.-Teilen Pektin, 0,2 Gew.-Teilen Aspartam;
d) Einrühren des zweiten Brotaufstrichbestandteils gemäss Schritt c) in das Gemisch gemäss Schritt b);
e) Zugeben eines dritten Brotaufstrichbestandteils aus 60 Gew.-Teilen Sorbit zu dem Gemisch gemäss Schritt d), Aufkochen des entstehenden Gemisches unter Rühren;
f) Zugeben und Verrühren eines vierten Brotaufstrichbestandteils aus 20 Gew.-Teilen Nussnugatcreme, 0,2 Gew.-Teilen Cola-Aroma, 1 Gew.-Teil Karamel-Aroma zu dem bzw. mit dem Gemisch gemäss Schritt e) und Abfüllen des fertigen Aufstrichs.

14. Verfahren nach Anspruch 13, **dadurch gekennzeichnet, dass** das Auflösen gemäss Schritt b) bei einer Temperatur von etwa 60 °C, das Aufkochen gemäss Schritt e) für einen Zeitraum von etwa 5 s und das Abfüllen gemäss Schritt f) bei einer Temperatur von etwa 85 °C erfolgt.

## Claims

1. Spread containing at least:
- one beverage
- sugar or sweetening agent
- thickening agent
- acidification agent
- cola aroma

2. Spread according to claim 1, **wherein** the beverage is an alcoholic beverage or a non-alcoholic beverage, preferably composed of water, milk, fruit juice or vegetable juice.

3. Spread according to claim 1 or 2, **wherein** the sugar is preferably composed of the substance trehalose, and the sweetening agent is a sugar substitute, preferably mannitol, xylite, sorbite, isomalt, maltitol, lactitol or starch syrup, or the sweetening agent is a sweetening substance, preferably cyclamate, aspartame, saccharin or acesulfam potassium.

4. Spread according to one of the above claims, **wherein** the thickening agent is preferably agar-agar, gum Arabic, pectin, guar flour, carob bean flour, starch, dextrin or gelatin.

5. Spread according to one of the above claims, **wherein** the thickening agent contains carob bean flour and pectin or pectin and cornstarch.

6. Spread according to one of the above claims, wherein the acidification agent contains citric acid, tartaric acid and/or lactic acid.

7. Spread according to one of the above claims, **wherein** a fruit mixture contains applesauce and/or a nougat mixture such as mixtures composed of nut nougat, almond nougat, almond-nut-nougat or sweetened nut pulp - especially a nut-nougat cream.

8. Spread according to one of the above claims, **wherein** a food-coloring agent is contained preferably in the form of caramel syrup

9. Spread according to one of the above claims, **wherein** additional aroma substances are contained, preferably caramel aroma and/or lime aroma, and/or stimulating substances, preferably caffeine and taurine.

10. Spread according to one of the claims 1 to 9, **wherein** the following ingredients in proportions of weight are contained:
| | |
|---|---|
| 100 | parts water |
| | |
| 20 | parts sugar |
| 1.6 | parts carob bean flour |
| 1.6 | parts pectin |
| | |
| 40 | parts starch syrup |
| 20 | parts sugar |
| 40 | parts applesauce |
| 20 | parts caramel syrup |
| | |
| 1.5 | parts citric acid |
| 0.9 | parts cola aroma |
| 0.6 | parts caramel aroma |
| 0.1 | part lime aroma |

11. Spread according to one of the claims 1 to 7 and 9, wherein the following ingredients proportions of weight are included:
| | |
|---|---|
| 100 | parts milk |
| 50 | parts isomalt |
| | |
| 7 | parts corn starch |
| 1.6 | parts pectin |
| 0.2 | parts aspartame |
| | |
| 60 | parts sorbite |
| | |
| 20 | parts nut-nougat cream |
| 0.2 | parts cola aroma |
| 1 | part caramel aroma |

12. Spread according to produce a spread according to claims 10, wherein the following steps are involved:
a) Preparing an initial spread ingredient in proportions of weight of 100 parts water
b) Mixing a second spread ingredient in proportions of weight of 20 parts sugar, 1.6 parts carob bean flour and 1.6 parts pectin.
c) Stirring in the second spread ingredient in accordance with step b) into the first spread ingredient in accordance with step a) and bringing the resultant mixture to a boil.
d) Adding a third spread ingredient in proportions of weight of 40 parts starch syrup, 20 parts sugar, 40 parts applesauce, 20 parts caramel syrup to the mixture in accordance with step c); dissolving the third spread component by stirring the resultant mixture and bringing it to boil.
e) Mixing a forth spread ingredient composed of 1.5 parts citric acid, 0.9 parts cola aroma, 0.6 parts caramel aroma and 0.1 part lime aroma.
f) Adding and stirring the forth spread ingredient to or with the boiled mixture in accordance with step d) and decanting the finished spread at a temperature of approximate 85° C.

13. Process to produce a spread according to claim 10, wherein the following steps are involved:
a) Preparing an initial spread ingredient of 100 parts milk in proportions of weight.
b) Stirring in and dissolving 50 parts of isomalt in proportions of weight
c) Mixing a second spread ingredient in proportions of weight of 7 parts cornstarch, 1.6 parts pectin and 0.2 parts aspartame.
d) Stirring in the second spread ingredient in accordance with step c) into the first spread ingredient in accordance with step b).
e) Adding a third spread ingredient in proportions of weight of 60 parts sorbite to the mixture in accordance with step d); bringing the third spread component to a boil while stirring.
f) Adding and stirring in a forth spread ingredient composed of 20 parts nut-nougat cream, 0.2 parts cola aroma and 1 part caramel aroma to or with the boiled mixture in accordance with step e) and decanting the finished spread.

14. Process to produce a spread according to claim 13, **wherein** the dissolving in accordance with step b) is done at a temperature of approximately 60° C, the bringing to a boil in accordance with step e) for a time period of approximately 5 seconds, and the decanting in accordance with step f) is done at a temperature of approximately 85° C.

## Revendications

1. Préparation à tartiner comprenant une boisson, du sucre ou un édulcorant, un épaississant, un acidifiant et arôme cola **caractérisée par** une pâte fruitée

2. Préparation à tartiner selon la revendication 1, **caractérisée par le fait que** la boisson est une boisson alcoolique ou une boisson sans alcool, de préférence de l'eau, du lait, un jus de fruit, un jus de légume ;

3. Préparation à tartiner selon la revendication 1 ou 2 **caractérisée par le fait que** le sucre tréhalose, que le produit sucrant est un produit de substitution du sucre, de préférence mannite, xylite, sorbite, isomalte, maltite, lactite, sirop d'amidon ou que le produit sucrant est un édulcorant de préférence cyclamate, aspartame, saccharine, potassium acésulfame.

4. Préparation à tartiner selon l'une des revendications précédentes **caractérisée par le fait que** l'épaississant est de préférence de l'agar-agar, de la gomme arabique, de la pectine, de la farine guar, de la farine de graines de caroube, de l'amidon, de la dextrine, de la gélatine.

5. Préparation à tartiner selon l'une des revendications précédentes, **caractérisée par le fait que** l'épaississant contient de la farine de graines de caroube et de la pectine ou que l'épaississant contient de la pectine et de l'amidon de mais.

6. Préparation à tartiner selon l'une des revendications précédentes, **caractérisée par le fait que** l'acidifiant contient de l'acide citrique, de l'acide de vin et/ou de l'acide lactique

7. Préparation à tartiner selon l'une des revendications précédentes **caractérisée par le fait que** la pâte fruitée contient de la compote de pomme et/ou une pâte pralinée telle que pâte pralinée à base de noisettes, à base d'amandes, pâte aux amandes-noisettes, concentré de noisettes sucré et en particulier pâte pralinée aux noisettes.

8. Préparation à tartiner selon l'une des revendications précédentes, **caractérisée de plus par** un colorant alimentaire de préférence sous forme de sirop de caramel.

9. Préparation à tartiner selon l'une des revendications précédentes **caractérisée par** d'autres substances aromatisantes de préférence arôme caramel et/ou arôme de limettes et/ou produits stimulants, de préférence caféine, taurine.

10. Préparation à tartiner selon les revendications 1 à 9 **caractérisée par** les constituants suivants exprimés en pourcentages de poids :
| | |
|---|---|
| 100 | unités d'eau |
| | |
| 20 | unités de sucre |
| 1,6 | unité de farine de graines de caroubes |
| 1,6 | unité de pectine |
| | |
| 40 | unités de sirop d'amidon |
| 20 | unités de sucre |
| 40 | unités de compote de pommes |
| 20 | unités de sirop caramélisé |
| | |
| 1,5 | unité d'acide citrique |
| 0,9 | unité d'arôme cola |
| 0,6 | unité d'arôme caramel |
| 0,1 | unité d'arôme de limettes |

11. Préparation à tartiner selon les revendications 1 à 7 et 9, **caractérisée par** les constituants suivants en pourcentage de poids ;
| | |
|---|---|
| 100 | unités de lait |
| 50 | unités d'isomalte |
| | |
| 7 | unités d'amidon de maïs |
| 1,6 | unité de pectine |
| 0,2 | unité d'aspartame |
| | |
| 60 | unités de sorbite |
| 20 | unités de pâte pralinée aux noisettes |
| 0,2 | unités d'arôme cola |
| 1 | unité d'arôme caramel |

12. Méthode pour la fabrication d'une préparation à tartiner selon la revendication 10 **caractérisée par** les étapes suivantes :
a) Préparer une première partie de préparation à tartiner composée de 100 parties d'eau en poids ;
b) Mélanger une deuxième partie de préparation à tartiner composée de 20 parties de sucre en poids, 1,6 partie en poids de farine de graines de caroube, 1,6 parties en poids de pectine ;
c) Délayer la deuxième partie de préparation à tartiner selon l'étape b) dans le première partie de préparation à tartiner selon l'étape a) et faire bouillir le mélange ainsi obtenu ;
d) Ajouter une troisième partie de préparation à tartiner composée de 40 parties en poids de sirop d'amidon, 20 parties en poids de sucre, 40 parties en poids de compote de pommes, 20 parties en poids de sirop de caramel au mélange obtenu selon la phase c), dissoudre la troisième partie de préparation à tartiner en la remuant et faire bouillir le mélange obtenu ;
e) Mélanger une quatrième partie de préparation à tartiner composée de 1,5 parties en poids d'acide citrique, 0,9 partie en poids d'arôme cola, 0,6 partie en poids d'arôme caramel, 0,1 partie en poids d'arôme de limettes ;
f) Ajouter et mélanger la quatrième partie de préparation à tartiner au mélange porté à ébullition selon la phase d) et effectuer le remplissage de la préparation terminée par une température de 85°C.

13. Méthode pour la fabrication d'une préparation à tartiner selon la revendication 11 **caractérisée par** les étapes suivantes :
a) Préparer une première partie de préparation à tartiner composée de 100 parties de lait en poids ;
b) Délayer et dissoudre 50 parties d'isomalte en poids dans la première partie de préparation à tartiner selon l'étape a) ;
c) Mélanger une deuxième partie de préparation à tartiner composée de 7 parties d'amidon de maïs en poids, 1,6 partie de pectine en poids, de 0,2 partie en poids d'aspartame ;
d) Délayer la deuxième partie de préparation à tartiner selon l'étape c) dans le mélange selon l'étape b) ;
e) Ajouter une troisième partie de préparation à tartiner composée de 60 parties en poids de sorbite au mélange obtenu selon la phase d), porter le mélange obtenu à ébullition en le remuant ;
f) Ajouter et mélanger une quatrième partie de préparation à tartiner composée de 20 parties en poids de pâte pralinée aux noisettes, de 0,2 partie en poids d'arôme cola, d'1 partie en poids d'arôme caramel au mélange obtenu à l'étape e) et effectuer le remplissage de la préparation terminée.

14. Méthode selon la revendication 13 **caractérisée par le fait que** la dissolution selon l'étape b) a lieu par une température d'environ 60°, l'ébullition selon l'étape e) est maintenue pendant une durée d'environ 5 s et le remplissage selon l'étape f) est effectué par une température d'environ 85°C.
